# EUROPÄISCHE PATENTSCHRIFT

(11) **EP 3 047 916 B1**
(45) Veröffentlichungstag und Bekanntmachung des Hinweises auf die Patenterteilung: **03.04.2019**
(21) Anmeldenummer: 15200743.1
(22) Anmeldetag: 17.12.2015
(51) Int. Cl.: B05D 7/02, B05D 7/00, B05D 1/02, B05D 1/30

(54) **VERFAHREN ZUM BESCHICHTEN EINES KUNSTSTOFFTEILS MIT EINEM LACK UND ABDECKSCHEIBE EINER KRAFTFAHRZEUGBELEUCHTUNGSEINRICHTUNG, DIE NACH DEM VERFAHREN BESCHICHTET WORDEN IST**
METHOD FOR COATING A PLASTIC PART WITH A VARNISH AND COVERING PANE OF A MOTOR VEHICLE LIGHTING DEVICE COATED ACCORDING TO THE METHOD
PROCEDE DESTINE A REVETIR DE PEINTURE UNE PARTIE EN PLASTIQUE ET PLAQUE DE RECOUVREMENT D'UN DISPOSITIF D'ECLAIRAGE DE VEHICULE AUTOMOBILE REVETU SELON LEDIT PROCEDE

(30) Priorität: 21.01.2015 DE 102015200948
(43) Veröffentlichungstag der Anmeldung: 27.07.2016
(73) Patentinhaber: Automotive Lighting Reutlingen GmbH, 72762 Reutlingen (DE)
(72) Erfinder: Kuhn, Sandra, 72766 Reutlingen (DE); Nothdurft, Steffen, 72760 Reutlingen (DE); Cordero, Stefano, 72764 Reutlingen (DE); Tauss, Manfred, 72760 Reutlingen (DE)
(74) Vertreter: DREISS Patentanwälte PartG mbB

(56) Entgegenhaltungen:
- EP-A1- 1 475 359
- EP-A1- 2 394 746
- EP-A1- 2 907 706
- WO-A1-2008/134768
- DE-A1-102006 040 200

## Beschreibung

Die vorliegende Erfindung betrifft ein Verfahren zum Beschichten eines Kunststoffteils mit einem Lack. Dabei wird in einem Flutschritt eine zu beschichtende Fläche des Kunststoffteils durch Beaufschlagung eines Anflutbereichs der zu beschichtenden Fläche mit Lack und durch Ablaufen des Lacks über einen Abflutbereich mit einer Lackschicht versehen.

Schließlich betrifft die Erfindung auch eine Abdeckscheibe aus einem Kunststoffmaterial, zum Verschließen einer Lichtaustrittsöffnung einer Beleuchtungseinrichtung eines Kraftfahrzeugs.

Die Beschichtung eines Kunststoffteils kann dazu dienen, das Bauteil gegen Bewitterung und sonstige Umwelteinflüsse (z.B. UV-Strahlung) zu schützen. Bei Polycarbonat-Bauteilen kann durch eine geeignete Beschichtung eine verbesserte Witterungs- und Medienbeständigkeit und eine verringerte Kratzempfindlichkeit erzielt werden.

Flutverfahren zum Ausbilden von Beschichtungen auf flächigen, im Wesentlichen ebenen Kunststoffteilen sind aus dem Stand der Technik bekannt (vgl. bspw. DE 10 2004 027 842 A1) und werden in der Regel so ausgeführt, dass das Kunststoffteil zum Beschichten im Wesentlichen vertikal ausgerichtet wird und eine zu beschichtende Fläche des Kunststoffteils in einem sogenannten Anflutbereich mit Lack oder dergleichen beaufschlagt wird. Der Anflutbereich liegt am oberen Ende des vertikal ausgerichteten Kunststoffteils. Das Aufbringen von Lack auf den Anflutbereich kann bspw. dadurch erfolgen, dass das Kunststoffteil relativ zu einem Flutvorhang bewegt wird, so dass der Lack auf den Anflutbereich gelangt. Anschließend verteilt sich der in dem Anflutbereich aufgebrachte Lack schwerkraftbedingt und abhängig von seiner Viskosität über die restliche zu beschichtende Fläche. Als Abflutbereich wird der Teil der zu beschichtenden Fläche bezeichnet, über den der im Anflutbereich aufgebrachte Lack abfließt. Bei einem vertikal ausgerichteten Kunststoffteil fließt der im Anflutbereich aufgebrachte Lack nach unten ab. Der Abflutbereich liegt also unterhalb des Anflutbereichs.

Die bei einem vertikal ausgerichteten flächigen Kunststoffteil im Rahmen des Flutverfahrens gebildete Beschichtung hat eine keilförmige Schichtdickenverteilung, wobei sich in dem Anflutbereich eine geringere Schichtstärke als in dem Abflutbereich ausbildet. Wenn das beschichtete Bauteil bspw. in einem sichtbaren Bereich eines Kraftfahrzeugs eingesetzt wird, bspw. als transparentes Dachelement eines Kraftfahrzeugs, ist die in dem Anflutbereich ausgebildete Schichtstärke gegebenenfalls nicht ausreichend, um das Bauteil hinreichend gegen Bewitterung und sonstige schädliche Einflüsse zu schützen.

Deshalb wird in der DE 10 2006 040 200 A1 vorgeschlagen, zur Beschichtung eines großflächigen, im Wesentlichen ebenen transparenten Kunststoff-Dachelements eines Kraftfahrzeugs den Anflutbereich vor Ausführung des Flutschritts in einem Sprühschritt mit Lack zu besprühen, so dass in dem Anflutbereich eine Lackbeschichtung gebildet wird, die aus aufgesprühtem und aufgeflutetem Lack besteht, und im Abflutbereich der zu beschichtenden Fläche eine Lackbeschichtung gebildet wird, die nur aus aufgeflutetem Lack besteht. Dadurch soll die Schichtdicke des auf das Kunststoffbauteil aufgebrachten Lacks möglichst gleichmäßig und damit die Schutzwirkung in dem Anflutbereich des Bauteils verbessert werden.

Das in der DE 10 2006 040 200 A1 vorgeschlagene Verfahren funktioniert jedoch nur bei großflächigen zu beschichtenden Kunststoffteilen, die eine im Wesentlichen ebene Form aufweisen und die während des Beschichtungsvorgangs eine vertikale ausgerichtete Flächenerstreckung aufweisen. Für komplexe, dreidimensionale Bauteile ist das Verfahren jedoch nicht geeignet, da diese während eines Beschichtungsvorgangs nicht in ihrer Gesamtheit vertikal ausgerichtet werden können. Immer mindestens ein Flächenbereich ist zwangsläufig nicht vertikal, sondern horizontal ausgerichtet. Unter Umständen ist es bei einem komplexen, dreidimensionalen Kunststoffteil sogar erforderlich, die Ausrichtung des Bauteils während des Beschichtungsvorgangs zu verändern, um eine lokale Ansammlung von abfließendem Lack, bspw. in Ecken und entlang von Kanten, zu verhindern.

Ein anderes Verfahren zum Beschichten eines Kunststoffteils ist bspw. aus der WO 2008/134 768 A1 bekannt.

Auch Abdeckscheiben moderner Kraftfahrzeug-Beleuchtungseinrichtungen bestehen üblicherweise aus Kunststoff, bspw. Polycarbonat, und werden deshalb zur Verbesserung der Kratz- und Witterungsbeständigkeit mit einem Lack beschichtet. Abdeckscheiben weisen in der Regel eine ebene oder leicht gewölbte transparente Lichtdurchtrittsfläche und einen sich außen daran anschließenden Randbereich auf. Der Randbereich der Abdeckscheibe eines Scheinwerfers steht üblicherweise nach hinten (also entgegen einer Fahrtrichtung des Kraftfahrzeugs) von der Lichtdurchtrittsfläche ab, so dass die Abdeckscheibe über die distale Kante oder Stirnfläche des Randbereichs in eine Lichtaustrittsöffnung eines Gehäuses der Beleuchtungseinrichtung eingesetzt an dem Gehäuse befestigt werden kann, bspw. mittels Kleben oder Laser-Schweißen. Bei einer Heckleuchte steht der Randbereich üblicherweise nach vorne (also in Fahrtrichtung) von der Lichtdurchtrittsfäche ab. Die Abdeckscheibe bildet also ein komplexes dreidimensionales Kunststoffteil mit einer ebenen oder leicht gewölbten Lichtdurchtrittsfläche und einem davon in etwa orthogonal abragenden Randbereich.

Zum Beschichten der Abdeckscheibe wird diese üblicherweise mit horizontal ausgerichteter Lichtdurchtrittsfläche und vertikal nach unten abragendem Randbereich durch einen Flutvorhang hindurchbewegt, so dass der Lack auf die Oberseite (die spätere Außenseite) der Lichtdurchtrittsfläche aufgeflutet wird. Durch die Wölbung der Lichtdurchtrittsfläche und/oder eine leichte Schrägstellung der Abdeckscheibe kann der aufgeflutete Lack seitlich über den Randbereich abfließen. Der Winkel der Schrägstellung der Abdeckscheibe gegenüber der Horizontalen kann so eingestellt werden, dass sich auf der gesamten Oberseite der Lichtdurchtrittsfläche eine Schichtdicke des Lacks innerhalb eines vorgegebenen Toleranzfensters ergibt. Auf den Außenseiten des Randbereichs ergibt sich dabei eine sehr dünne Schichtdicke, da der Randbereich im Wesentlichen vertikal ausgerichtet ist, sodass der Lack an dem Randbereich sehr schnell abfließt.

Bei der Wahl der Viskosität des Lacks ergibt sich bei der Beschichtung von komplexen dreidimensionalen Kunststoffteilen ein Zielkonflikt: Die Viskosität muss nämlich einerseits so niedrig gewählt werden, dass der Lack trotz der nahezu horizontalen Ausrichtung der Lichtdurchtrittsfläche gleichmäßig und schnell genug abfließt, so dass sich keine zu dicken Lackschichten auf der Oberseite der Lichtdurchtrittsfläche ergeben. Andererseits sollte die Viskosität hoch genug gewählt werden, dass der Lack trotz der nahezu vertikalen Ausrichtung des Randbereichs nicht zu schnell an diesem abfließt, so dass sich keine zu dünnen Lackschichten auf der Außenseite der Randbereichs ergeben.

Dünne Lackschichten im Randbereich wären zwar in ästhetischer Hinsicht unproblematisch, können aber bezüglich der Beständigkeit des Randbereichs gegenüber Witterungs- und Umwelteinflüssen zu Problemen führen. Bei in dem Kraftfahrzeug eingebauter Beleuchtungseinrichtung ist im Normalfall zwar nur die transparente Lichtdurchtrittsfläche zu sehen. Gleichwohl kann der Randbereich Witterungseinflüssen (z.B. UV-Strahlung) und Umwelteinflüssen (z.B. Streusalz) ausgesetzt sein, die bei einem unzureichenden Schutz des Randbereichs durch den aufgebrachten Lack zu einer frühzeitigen Alterung des Kunststoffmaterials und schließlich sogar zu einem Defekt der Abdeckscheibe, Undichtigkeiten und einem Eindringen von Feuchtigkeit in das Innere der Beleuchtungseinrichtung führen.

Der vorliegenden Erfindung liegt deshalb die Aufgabe zugrunde, ein Verfahren zur Beschichtung eines Kunststoffteils mit Lack dahingehend auszugestalten und weiterzubilden, dass es zur Beschichtung von komplexen, dreidimensional geformten Kunststoffteilen, wie bspw. von Abdeckscheiben für Kraftfahrzeug-Beleuchtungseinrichtungen, geeignet ist.

Zur Lösung dieser Aufgabe wird ausgehend von dem Beschichtungsverfahren der eingangs genannten Art vorgeschlagen, dass der Abflutbereich vor Ausführung des Flutschritts in einem Sprühschritt mit Lack besprüht wird, so dass in dem Abflutbereich eine Lackbeschichtung gebildet wird, die aus aufgesprühtem und aufgeflutetem Lack besteht, und in dem Anflutbereich der zu beschichtenden Fläche eine Lackbeschichtung gebildet wird, die nur aus aufgeflutetem Lack besteht.

Als eine alternative Lösung wird vorgeschlagen, dass die Beschichtung des Abflutbereichs vor der Ausführung des Flutschritts nicht mittels eines Sprühschritts, sondern mittels eines vorangehenden separaten Flutschrittes erfolgt. Demnach wird die Aufgabe auch durch ein Verfahren der eingangs genannten Art gelöst, bei dem der Abflutbereich vor Ausführung des Flutschritts in einem separaten vorgeschalteten Flutschritt mit Lack versehen wird, so dass in dem Abflutbereich eine Lackbeschichtung gebildet wird, die aus während des vorgeschalteten Flutschritts aufgeflutetem und während des nachfolgenden Flutschritts aufgeflutetem Lack besteht, und in dem Anflutbereich der zu beschichtenden Fläche eine Lackbeschichtung gebildet wird, die nur aus dem während des nachfolgenden Flutschritts aufgeflutetem Lack besteht.

Die gemeinsame erfinderische Idee, die beiden Lösungen zugrunde liegt, besteht darin, den Abflutbereich, wo bei komplexen dreidimensionalen Bauteilen mittels eines reinen Flutschrittes nur eine unzureichende Schichtdicke erzielt werden kann, vor dem Flutschritt in einem vorgeschalteten Schritt mit einer zusätzlichen Lackschicht zu versehen. Diese kann entweder im Rahmen eines Sprühschritts aufgesprüht oder durch Beaufschlagung des Abflutbereichs mit Lack in einem vorangehenden separaten Flutschritt aufgebracht werden. Somit wird das Bauteil in dem vorgeschalteten Schritt nur in dem kritischen Bereich, welcher bei komplexen dreidimensionalen Bauteilen durch den Abflutbereich gebildet ist, mit einer zusätzlichen Lackschicht versehen. Anschließend erfolgt eine an sich bekannte, im Wesentlichen vollflächige Beschichtung des Kunststoffteils nach einem Flutverfahren. In dem Sprühschritt bzw. dem separaten vorgeschalteten Flutschritt erfolgt somit ein partielles Vorbeschichten des Kunststoffteils. Durch das abschließende vollflächige Fluten des Bauteils wird eine optisch ansprechende Bauteilqualität und eine angenehme Haptik (z.B. glatte Oberflächen) erreicht. Durch das partielle Beschichten des Kunststoffteils mit Lack in dem vorgeschalteten Sprüh- oder Flutschritt wird eine partielle Schichtstärkenerhöhung in dem Abflutbereich geschaffen. Damit ist das erfindungsgemäße Verfahren für die Optimierung der Beschichtung eines komplexen dreidimensionalen Bauteils besonders gut geeignet.

Zudem ist es mit der vorliegenden Erfindung möglich, mittels gezieltem Aufsprühen von Lack in dem Abflutbereich auch solche Stellen des Bauteils mit einer Lackschicht zu versehen, die aufgrund der komplexen dreidimensionalen Form des Bauteils schlecht zugänglich sind und bei denen eine Beschichtung mittels eines Flutverfahrens nicht möglich wäre. Hier bietet die Kombination des Sprühverfahrens zur partiellen Beschichtung der schlecht zugänglichen Stellen des Bauteils mit dem anschließenden vollflächigen Flutverfahren einen besonderen Vorteil, so dass das Kunststoffteil an allen erforderlichen Stellen mit einer Lackschicht in der gewünschten Schichtstärke versehen werden kann.

Grundsätzlich ist das Verfahren nach der vorliegenden Erfindung für eine Vielzahl von Anwendungen geeignet, bei denen ein Kunststoffwerkstück mit einem Lack bzw. einer Beschichtung zu versehen ist. Insbesondere eignet sich das Verfahren nach der Erfindung aber zur Beschichtung eines komplex geformten dreidimensionalen Kunststoffteils mit einer abrieb- und kratzfesten Schicht, so dass das Kunststoffteil als Abdeckscheibe einer Beleuchtungseinrichtung eines Kraftfahrzeugs verwendet werden kann. Die Abdeckscheibe besteht vorzugsweise aus Polycarbonat. Die Abdeckscheibe weist vorzugsweise eine transparente Lichtdurchtrittsfläche und einen diese zumindest teilweise umgebenden, von dem äußeren Rand der Lichtdurchtrittsfläche in etwa orthogonal abstehenden Randbereich auf. Die Lichtdurchtrittsfläche bildet den Anflutbereich des Kunststoffteils und der Randbereich den vor Ausführung des Flutschritts zusätzlich mit Lack zu beschichtenden Abflutbereich des Kunststoffteils.

Der Begriff Fluten ist im vorliegenden Zusammenhang in seinem weitesten Sinne zu verstehen und umfasst auch herkömmlicherweise als Gießen bezeichnete Auftragungsprozesse, bei denen Lack aus einem Gefäß in dem Anflutbereich über das zu beschichtende Kunststoffteil geschüttet wird. Dies betrifft auch den vorgeschalteten separaten Flutschritt zur partiellen Beschichtung des Abflutbereichs, der ebenfalls den als Gießen bezeichneten Auftragungsprozess umfassen kann.

Gemäß einer vorteilhaften Weiterbildung der Erfindung wird vorgeschlagen, dass zwischen dem Sprühschritt oder dem vorgeschalteten Flutschritt und dem nachfolgenden Flutschritt ein Abdunstschritt erfolgt und bei dem nachfolgenden Flutschritt die bei dem Sprühschritt oder dem vorgeschalteten Flutschritt aufgetragene Lackschicht angelöst wird, so dass eine bei dem Sprühschritt oder dem vorgeschalteten Flutschritt entstandene Oberflächenstruktur aufgelöst wird. Durch das abschließende Fluten der zu beschichtenden Fläche kann die gegebenenfalls optischen Anforderungen nicht genügende Oberflächenstruktur der in dem Sprühschritt bzw. dem vorgeschalteten Flutschritt entstandenen Lackschicht aufgelöst werden. Ein Durchscheinen einer sogenannten orangenhautartigen Struktur durch die fertige Lackschicht kann somit verhindert werden.

Gemäß einer bevorzugten Ausführungsform wird das Kunststoffteil nach seiner Beschichtung mit dem Lack einem Lackaushärtungsschritt unterzogen. Der Lackaushärteschritt kann im Anschluss an das vorgeschaltete partielle Beschichten des Abflutbereichs mittels Sprühen oder Fluten oder aber nach Ausführung des abschließenden Flutschrittes erfolgen. Bei Verwendung eines herkömmlichen Lacks auf Polysiloxanbasis wird das beschichtete Bauteil hierzu erwärmt, bspw. einer Temperatur von etwa 100°C bis 150°C ausgesetzt. Es können aber auch Polysiloxanlacke eingesetzt werden, die unter Einwirkung von UV-Strahlung aushärten, wobei der Lackaushärteschritt dann eine Bestrahlung mit UV-Strahlung umfassen würde.

Der Auftrag der Beschichtung auf das Kunststoffteil erfolgt zweckmäßigerweise in einem Temperaturbereich zwischen 20°C und 40°C, d.h. im Wesentlichen bei Raumtemperatur, ist aber auch abhängig von dem jeweils eingesetzten Lack. Dies gilt sowohl für das vorgeschaltete partielle Beschichten des Abflutbereichs mittels Sprühen oder Fluten als auch für den abschließenden Flutschritt. Um im Rahmen des Beschichtungsverfahrens bereits von Beginn an die vorgegebene Temperatur für das Bauteil sicherstellen zu können, wird das Kunststoffteil vorzugsweise vor jeglicher Beschichtung mit dem Lack auf eine Temperatur zwischen 20°C und 40°C gebracht, die dann während der gesamten oder einem Teil der Beschichtung in diesem Temperaturfenster gehalten wird.

Gemäß einer anderen vorteilhaften Weiterbildung der Erfindung wird vorgeschlagen, dass die Sprühlackierung mittels Spritzdüsen und/oder die vorgeschaltete Flutlackierung und/oder die nachfolgende Flutlackierung mittels Flutdüsen ausgeführt werden. Dies erlaubt eine besonders platz- und ressourcensparende Beschichtung des Bauteils mit dem Lack. Zudem ergibt sich ein hoher Grad an Flexibilität, wenn eine Position und Ausrichtung der Spritzdüsen und/oder der Flutdüsen während der Beschichtung des Kunststoffteils mit dem Lack mittels eines Roboters relativ zu dem Kunststoffteil variiert werden. Auf diese Weise kann bspw. in dem Sprühschritt selbst ein schlecht erreichbarer Abflutbereich eines komplexen dreidimensionalen Bauteils erreicht und mit Lack besprüht werden.
Um selbst dann noch eine sichere und zuverlässige partielle Beschichtung des Abflutbereichs des Kunststoffbauteils in dem Sprühschritt bzw. in dem vorgeschalteten Flutschritt mit einer gewünschten Schichtdicke zu ermöglichen, wird vorgeschlagen, dass der für den Sprühschritt oder den vorgeschalteten Flutschritt verwendete Lack eine höhere Viskosität aufweist als der für den nachfolgenden Flutschritt verwendete Lack.

Nachfolgend werden anhand der Figuren verschiedene Ausführungsbeispiele des erfindungsgemäßen Verfahrens näher erläutert. Es zeigen:
- Figur 1: ein komplexes dreidimensionales Kunststoffteil zur Beschichtung mit dem erfindungsgemäßen Verfahren;
- Figur 2: das Kunststoffbauteil aus Figur 1, dessen Abflutbereich in einem vorgeschalteten Sprühschritt mit Lack besprüht wird;
- Figur 3: das Kunststoffbauteil aus Figur 1, dessen Abflutbereich in einem vorgeschalteten Sprühschritt mit Lack besprüht wird;
- Figur 4: das Kunststoffteil aus Figur 1, dessen Abflutbereich in einem vorgeschalteten Flutschritt mit Lack versehen wird; und
- Figur 5: ein Kunststoffteil aus den Figuren 2 bis 4, auf dessen Anflutbereich in einem nachfolgenden Flutschritt Lack aufgeflutet wird.

In den Figuren ist ein komplexes dreidimensionales Kunststoffteil 1 dargestellt, das beispielsweise aus Polycarbonat besteht und nach einem Spritzprägeverfahren hergestellt sein kann. Das hier dargestellte Kunststoffteil 1 bildet eine transparente oder zumindest bereichsweise eingefärbte Abdeckscheibe, die eine Lichtaustrittsöffnung einer Beleuchtungseinrichtung eines Kraftfahrzeugs verschließt. Die Beleuchtungseinrichtung kann ein Scheinwerfer, eine Heckleuchte oder eine beliebig andere Leuchte des Kraftfahrzeugs sein. Die Abdeckscheibe kann mit optisch wirksamen Elementen (zum Beispiel Prismen oder Zylinderlinsen) versehen sein, um die hindurchtretenden Lichtstrahlen abzulenken (sog. Streuscheibe).

Eine typische Abdeckscheibe 1 umfasst eine transparente Lichtdurchtrittsfläche 2, die eben beziehungsweise leicht gewölbt ausgebildet ist. In dem Beispiel ist die Fläche 2 leicht konvex nach oben gewölbt. Die Lichtdurchtrittsfläche 2 bildet den Teil der Abdeckscheibe 1, durch den nach ordnungsgemäßem Einbau der Beleuchtungseinrichtung in das Kraftfahrzeug und bei aktivierter Beleuchtungseinrichtung Licht hindurchtritt. Ferner umfasst die Abdeckscheibe 1 einen die Lichtdurchtrittsfläche 2 an ihrem äußeren Rand zumindest teilweise umgebenden Randbereich 3, der sich in einem Winkel zu der Lichtdurchtrittsfläche 2 erstreckt. In dem dargestellten Beispiel ist der Randbereich 3 nahezu orthogonal zu der Lichtdurchtrittsfläche 2 angeordnet. Der Randbereich 3 ragt ausgehend vom äußeren Umfang der Lichtdurchtrittsfläche 2 nach unten. Er erstreckt sich bei einem in dem Kraftfahrzeug ordnungsgemäß montiertem Scheinwerfer entgegen einer Fahrtrichtung des Kraftfahrzeugs. Bei einer Heckleuchte würde sich der Randbereich 3 im Wesentlichen in Fahrtrichtung erstrecken. Der Randbereich 3 ist bei in dem Kraftfahrzeug ordnungsgemäß angeordneter Beleuchtungseinrichtung in der Regel nicht mehr sichtbar, da er durch Karosserieteile (zum Beispiel Motorhaube, Heckklappe, Kotflügel, Stoßstange, etc.) verdeckt ist.

Bei einer als Scheinwerfer ausgebildeten Beleuchtungseinrichtung ist die Lichtdurchtrittsfläche 2 vorzugsweise transparent ausgebildet. Bei einer Heckleuchte kann die Lichtdurchtrittsfläche 2 auch in einer oder mehreren Farben eingefärbt sein. Die Färbung der Abdeckscheibe 1 kann entweder durch Einfärbung des Kunststoffmaterials 4 der Abdeckscheibe 1 oder aber durch Beschichtung mit einem farbigen Lack erzielt werden. Die Lichtdurchtrittsfläche 2 einer Heckleuchte kann beispielsweise rot (für Rücklicht, Bremslicht oder Nebelrücklicht) oder orange/gelb (für Blinklicht) eingefärbt sein. Der Randbereich 3 der Abdeckscheibe 1 kann sowohl für Scheinwerfer als auch für Heckleuchten in beliebiger Weise (bspw. schwarz oder silber) eingefärbt sein. Auch hier kann die Färbung des Randbereichs 3 entweder durch Einfärbung des Kunststoffmaterials 4 der Abdeckscheibe 1 oder durch Beschichten mit einem entsprechend eingefärbtem Lack erzielt werden.

Die Abdeckscheibe 1 wird mit einem distalen Randabschnitt 5 des Randbereichs 3 in eine entsprechend geformte Nut in einem Gehäuse der Beleuchtungseinrichtung eingesetzt und dort befestigt, beispielsweise mittels Kleben oder Laserschweißen. Die Nut in dem Gehäuse der Beleuchtungseinrichtung umgibt die Lichtaustrittsöffnung der Beleuchtungseinrichtung. In der Nut kann zur Abdichtung und Befestigung der Abdeckscheibe 1 eine Kleberaupe, bspw. aus Bitumen, angeordnet sein.

Die vorliegende Erfindung schlägt ein Verfahren zum Aufbringen einer Lackschicht auf die Außenfläche der Abdeckscheibe 1 vor, das für komplexe dreidimensionale Kunststoffteile jeglicher Art besonders gut geeignet ist. Insbesondere ist es mit dem erfindungsgemäßen Verfahren erstmals möglich, bestimmte, schwer zugängliche Bereiche des Bauteils 1 mit einer Lackschicht einer vorgegebenen, definierten Schichtdicke zu versehen. Die Lackschicht dient zur Herstellung einer kratzfesten und witterungsbeständigen Schutzschicht. Der Lack ist vorzugsweise transparent und auf Polysiloxanbasis hergestellt.

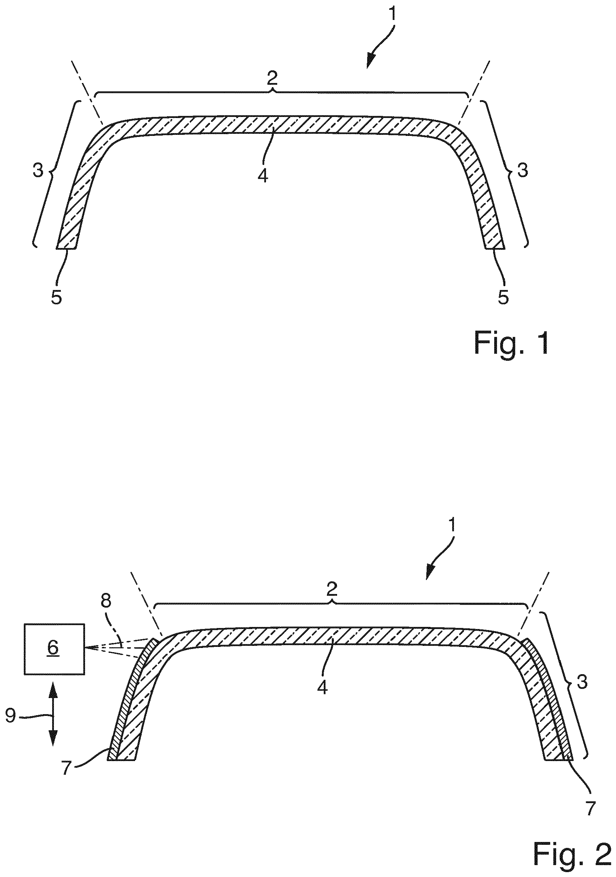

Zur Beschichtung der Außenfläche wird das in Figur 1 im Ruhezustand dargestellte Kunststoffteil 1 derart in eine nicht näher dargestellte Lackieranlage eingebracht, dass ein Abschnitt (in Figur 1 die transparente Lichtdurchtrittsfläche 2) im Wesentlichen horizontal und ein anderer Abschnitt (bei dem dargestellten Kunststoffteil 1 der Randbereich 3) im Wesentlichen vertikal ausgerichtet sind. Es ist bekannt, das Teil 1 mit Lack zu beschichten, indem in einem Flutschritt die zu beschichtende Außenfläche des Kunststoffteils 1 durch Beaufschlagung eines Anflutbereichs 2 der zu beschichtenden Fläche mit Lack und durch Ablaufen des Lacks über einen Abflutbereich 3 mit einer Lackschicht zu versehen. Dieser Flutschritt alleine führt jedoch zu sehr unterschiedlichen Schichtdicken der aufgebrachten Lackschicht, insbesondere zu sehr dünnen Dicken der Lackschicht im Bereich des Abflutbereichs 3. Aus diesem Grund schlägt die Erfindung ein verbessertes Beschichtungsverfahren für komplexe, dreidimensionale Kunststoffteile 1 vor.

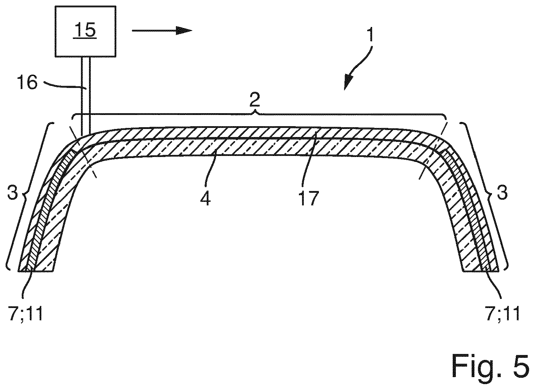

In der Lackieranlage wird an einer ersten Arbeitsstation, die einem sogenannten Sprühschritt zugeordnet ist, an der zu beschichtenden Fläche des Kunststoffteils 1 in dem Bereich 3 über Spritzdüsen 6 ein Lack 8 zur Ausbildung einer Sprühschicht 7 aufgesprüht (vgl. Figur 2). Der Bereich 3, der mit zerstäubtem Lack 8 beaufschlagt wird, stellt den Abflutbereich in einem anhand der Figur 5 näher beschriebenen nachfolgenden Flutschritt dar. Der Bereich 3 kann entweder vollflächig oder nur teilweise mit der Sprühschicht 7 versehen werden. In dem Beispiel der Figur 2 ist eine Sprühdüse 6 gezeigt, die den Lack in einem relativ stark gebündelten Sprühstrahl 8 auf die Außenfläche des Abflutbereichs 3 aufsprüht. Um einen gewünschten Flächenabschnitt des Bereichs 3 mit Lack 8 zu besprühen, kann die Sprühdüse 6 in Richtung eines Pfeils 9 hin und her bewegt werden. Alternativ ist es selbstverständlich denkbar, dass die Sprühdüse 6 feststehend ausgebildet ist und die Abdeckscheibe 1 in entgegengesetzter Richtung hin und her bewegt wird. Es kommt alleine auf eine Relativbewegung zwischen der Flächenerstreckung des Bereichs 3 der Abdeckscheibe 1 und der Sprühdüse 6 beziehungsweise dem Sprühstrahl 8 an. Der Sprühschritt kann auf dem gesamten Randbereich 3 oder nur auf Teilen des Randbereichs 3 ausgeführt werden.

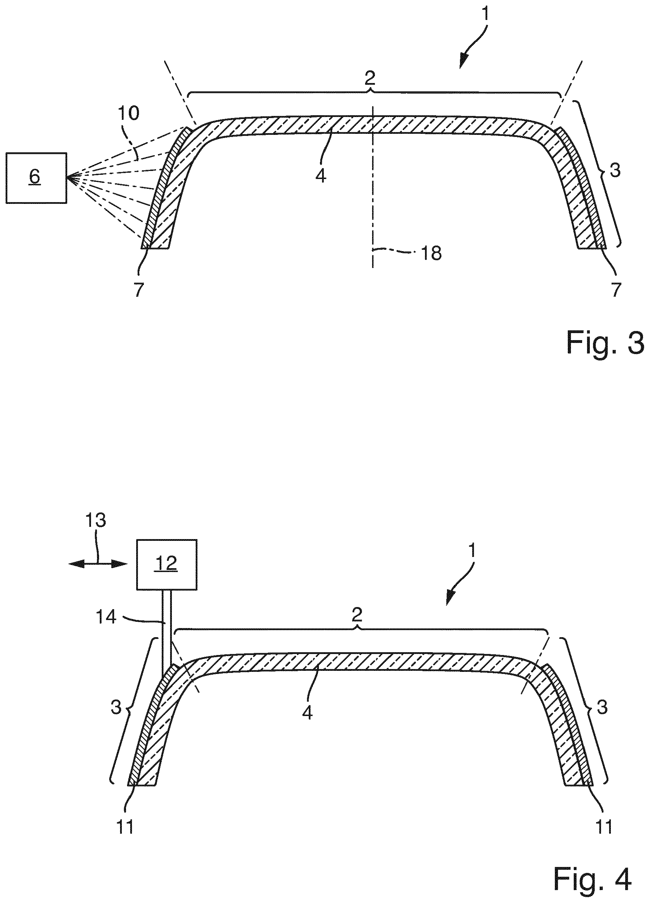

In Figur 3 ist eine alternative Ausführungsform gezeigt, bei der die Sprühdüse 6 einen relativ breit gefächerten Sprühstrahl 10 hat, der auch ohne Bewegung der Düse 6 relativ zur Flächenerstreckung des Bereichs 3 der Abdeckscheibe 1 den gewünschten Flächenabschnitt des Randbereichs 3 mit der Sprühschicht 7 versehen kann. Um die Außenfläche des Randbereichs 3 über einen größeren Flächenbereich hinweg mit der Sprühschicht 7 zu versehen, ist es denkbar, dass die Abdeckscheibe 1 um eine Rotationsachse 18 relativ zu dem Sprühstrahl 10 rotiert. Alternativ kann bei feststehender Abdeckscheibe 1 auch die Sprühdüse 6 um die Achse 18 relativ zu der Abdeckscheibe 1 rotieren. Selbstverständlich wäre eine Rotation der Abdeckschiebe 1 bzw. der Sprühdüse 6 um die Achse 18 auch bei dem Beispiel der Figur 2 denkbar.

In Figur 4 ist eine weitere alternative Ausführungsform der Erfindung dargestellt, bei der auf die Außenfläche des Randbereichs 3 beziehungsweise einen Teilbereich des Randbereichs 3 eine erste Flutschicht 11 aufgebracht wird. Dazu ist eine Auftrageinrichtung 12 vorgesehen, die den Bereich 3 oder einen Teilbereich davon mit Lack flutet, um die Flutschicht 11 auf der Außenfläche des Randbereichs 3 zu erzeugen. Es ist denkbar, dass die Auftrageinrichtung 12 in Richtung eines Pfeils 13 hin und her bewegbar ist, so dass Lack 14 auf den gewünschten Abschnitt des Randbereichs 3 aufgeflutet wird. Alternativ ist es denkbar, dass die Auftrageinrichtung 12 feststehend ausgebildet ist und stattdessen die Abdeckscheibe 1 in Richtung des Pfeils 13 relativ zu der Auftrageinrichtung 12 hin und her bewegt wird, so dass der aufgeflutete Lack 14 die Lackschicht 11 der gewünschten Größe bildet.

In den Figuren 2 bis 4 ist der Vorgang des Aufbringens einer ersten Lackschicht 7, 11 jeweils nur für einen linken Randbereich 3 beziehungsweise einen Teil des Abflutbereiches des Kunststoffteils 1 dargestellt. Selbstverständlich kann auch die Lackschicht 7, 11 auf dem Randbereich 3 an der gegenüberliegenden Seite des Kunststoffteils 1 oder an einem beliebig anderen Abschnitt des Randbereichs 3 in entsprechender Weise aufgebracht werden. Es ist ferner denkbar, dass Lackschichten 7, 11 auf unterschiedlichen Abschnitten des Abflutbereiches 3 auf unterschiedliche Art und Weise aufgebracht werden. In den Figuren 2 bis 4 sind verschiedenen Möglichkeiten aufgezeigt worden, um einen Abflutbereich 3 eines komplexen dreidimensionalen Kunststoffteils 1 zumindest bereichsweise mit einer partiellen Lackschicht 7, 11 zu versehen.

Nach Durchführung des in den Figuren 2 bis 4 dargestellten Beschichtungsschritts zum partiellen Aufbringen der Lackschicht 7, 11 kann man den Lack 7, 11 kurzzeitig abdunsten lassen. An der Lackschicht 7, 11 bildet sich eine Oberflächenstruktur aus, die unter Umständen nicht einem gewünschten oder geforderten ästhetischen Erscheinungsbild entspricht, beispielsweise weil sie orangenhautartig ausgebildet ist. Dies kann dann jedoch in dem nachfolgenden Flutschritt (vgl. Figur 5) behoben werden, wie noch erläutert wird.

In dem nachfolgenden Flutschritt der Figur 5 wird das Kunststoffteil 1, das in dem vorgeschalteten Schritt mit der Lackschicht 7, 11 versehen wurde (vgl. Figuren 2 bis 4), wird das Kunststoffteil 1 in einer weiteren Arbeitsstation in seinem Anflutbereich 2 mittels einer Auftrageinrichtung 15 großflächig mit Lack 16 geflutet. Der für den Flutschritt verwendete Lack 16 kann dem Lack 8, 10; 14 entsprechen, der für den Sprühschritt der Figur 2 oder 3 beziehungsweise für den vorgeschalteten Flutschritt der Figur 4 verwendet wurde. Vorzugsweise weist der Lack 16 für den nachfolgenden Flutschritt jedoch eine geringere Viskosität auf als der für den Sprühschritt (vgl. Figur 2 oder 3) oder den vorangegangenen Flutschritt (vgl. Figur 4) verwendete Lack 8, 10; 14.

Der in dem Anflutbereich 2 aufgeflutete Lack läuft über den vertikal ausgerichteten Randbereich 3 des Kunststoffteils 1 an der zu beschichtenden Fläche nach unten ab, sodass der Randbereich 3 den sogenannten Abflutbereich dargestellt. Es bildet sich damit auf der Außenfläche des Kunststoffteils 1 vollflächig eine hier als Flutschicht 17 bezeichnete Lackschicht mit einer Schichtdickenverteilung aus, die sich in Abhängigkeit von einer Neigung der transparenten Lichtdurchtrittsfläche 2 beziehungsweise der entsprechenden Randbereiche 3 des Kunststoffteils 1 ergibt. Insbesondere ist die Schichtdicke der Flutschicht 17 in dem Abflutbereich 3 kleiner als in dem Anflutbereich 2. Das ergibt sich dadurch, dass der Lack 16 von dem vertikal ausgerichteten Randbereich 3 schneller abfließt als von der horizontalen Lichtdurchtrittsfläche 2. Die geringere Schichtdicke der Flutschicht 17 in dem Abflutbereich 3 wird durch die in dem vorgeschalteten Beschichtungsschritt aufgebrachte zusätzliche partielle Lackschicht 7, 11 kompensiert, so dass sich über die gesamte zu beschichtende Fläche des Kunststoffteils 1 eine im Wesentlichen konstante Schichtdicke ergibt. Jedenfalls liegt die resultierende Schichtdicke der Lackschicht umfassend die zuvor aufgebrachte Lackschicht 7, 11 sowie die Flutschicht 17 über die gesamte zu beschichtende Fläche innerhalb eines vorgegebenen Toleranzfensters.

Abschließend kann das mit Lack versehene Kunststoffteil 1 einem Lackaushärtungsschritt zugeführt und auf etwa 100°C bis 150°C erhitzt werden. Alternativ oder zusätzlich kann das mit Lack beschichtete Kunststoffteil 1 auch einer Bestrahlung mit ultravioletter Strahlung zum Aushärten des verwendeten Lacks ausgesetzt werden.

Durch die erfindungsgemäße Kombination eines Sprühverfahrens (vgl. Figuren 2 und 3) beziehungsweise eines separaten vorangestellten Flutverfahrens (vgl. Figur 4) zur partiellen Beschichtung des Abflutbereichs 3 und eines nachfolgenden Flutverfahrens (vgl. Figur 5) zur großflächigen Beschichtung der gesamten zu beschichtenden Fläche kann auch bei komplexen, dreidimensionalen Kunststoffteilen 1 eine Lackschicht mit einem definierten Schichtstärkeaufbau hergestellt werden. Insbesondere kann in dem Abflutbereich 3 eine Schichtstärke erreicht werden, die den im Karosserieaußenbereich eines Kraftfahrzeugs gestellten Anforderungen hinsichtlich Kratz- und Witterungsbeständigkeit genügt.

## Patentansprüche

1. Verfahren zum Beschichten eines Kunststoffteils (1) mit einem Lack, wobei in einem Flutschritt eine zu beschichtende Fläche des Kunststoffteils (1) durch Beaufschlagung eines Anflutbereichs (2) der zu beschichtenden Fläche mit Lack (16) und durch Ablaufen des Lacks (16) über einen Abflutbereich (3) mit einer Lackschicht (17) versehen wird, **dadurch gekennzeichnet, dass** der Abflutbereich (3) vor Ausführung des Flutschritts in einem Sprühschritt mit Lack (8; 10) besprüht wird, so dass in dem Abflutbereich (3) eine Lackbeschichtung (7, 17) gebildet wird, die aus aufgesprühtem und aufgeflutetem Lack (8, 10; 16) besteht, und in dem Anflutbereich (2) der zu beschichtenden Fläche eine Lackbeschichtung (17) gebildet wird, die nur aus aufgeflutetem Lack (16) besteht.

2. Verfahren zum Beschichten eines Kunststoffteils (1) mit einem Lack, wobei in einem Flutschritt eine zu beschichtende Fläche des Kunststoffteils (1) durch Beaufschlagung eines Anflutbereichs (2) der zu beschichtenden Fläche mit Lack (16) und durch Ablaufen des Lacks (16) über einen Abflutbereich (3) mit einer Lackschicht (17) versehen wird, **dadurch gekennzeichnet, dass** der Abflutbereich (3) vor Ausführung des Flutschritts in einem separaten vorgeschalteten Flutschritt mit Lack (14) versehen wird, so dass in dem Abflutbereich (3) eine Lackbeschichtung (11, 17) gebildet wird, die aus während des vorgeschalteten Flutschritts aufgeflutetem und während des nachfolgenden Flutschritts aufgeflutetem Lack (14, 16) besteht, und in dem Anflutbereich (2) der zu beschichtenden Fläche eine Lackbeschichtung (17) gebildet wird, die nur aus dem während des nachfolgenden Flutschritts aufgeflutetem Lack (16) besteht.

3. Verfahren nach Anspruch 1 oder 2, **dadurch gekennzeichnet, dass** zwischen dem Sprühschritt oder dem vorgeschalteten Flutschritt und dem nachfolgenden Flutschritt ein Abdunstschritt erfolgt und bei dem nachfolgenden Flutschritt die bei dem Sprühschritt oder dem vorgeschalteten Flutschritt aufgetragene Lackschicht (7; 11) angelöst wird, so dass eine bei dem Sprühschritt oder dem vorgeschalteten Flutschritt entstandene Oberflächenstruktur aufgelöst wird.

4. Verfahren nach einem der Ansprüche 1 bis 3, **dadurch gekennzeichnet, dass** das Kunststoffteil (1) nach seiner Beschichtung mit dem Lack (8; 10; 14; 16) einem Lackaushärtungsschritt unterzogen wird.

5. Verfahren nach einem der Ansprüche 1 bis 4, **dadurch gekennzeichnet, dass** das Kunststoffteil (1) vor der Beschichtung mit dem Lack (8; 10; 14; 16) auf eine Temperatur zwischen 20°C und 40°C gebracht wird.

6. Verfahren nach einem der Ansprüche 1 bis 5, **dadurch gekennzeichnet, dass** das Kunststoffteil (1) während der Beschichtung mit dem Lack (8; 10; 14; 16) auf einer Temperatur zwischen 20°C und 40°C gehalten wird.

7. Verfahren nach einem der Ansprüche 1 bis 6, **dadurch gekennzeichnet, dass** der Sprühschritt mittels Spritzdüsen (6) und/oder der vorgeschaltete Flutschritt und/oder der nachfolgende Flutschritt mittels Flutdüsen (12) ausgeführt werden.

8. Verfahren nach Anspruch 7, **dadurch gekennzeichnet, dass** eine Position und/oder Ausrichtung der Spritzdüsen (6) und/oder der Flutdüsen (12; 15) während der Beschichtung des Kunststoffteils (1) mit dem Lack (8; 10; 14; 16) mittels eines Roboters relativ zu dem Kunststoffteil (1) variiert wird.

9. Verfahren nach einem der Ansprüche 1 bis 8, **dadurch gekennzeichnet, dass** das Kunststoffteil (1) eine Abdeckscheibe einer Kraftfahrzeug-Beleuchtungseinrichtung ist.

10. Verfahren nach Anspruch 9, **dadurch gekennzeichnet, dass** die Abdeckscheibe aus Polycarbonat hergestellt ist.

11. Verfahren nach Anspruch 9 oder 10, **dadurch gekennzeichnet, dass** die Abdeckscheibe eine transparente Lichtdurchtrittsfläche (2) und einen diese zumindest teilweise umgebenden Randbereich (3) aufweist, wobei die Lichtdurchtrittsfläche (2) den Anflutbereich des Kunststoffteils und der Randbereich (3) den Abflutbereich des Kunststoffteils (1) bildet.

12. Verfahren nach einem der Ansprüche 1 bis 11, **dadurch gekennzeichnet, dass** der Lack auf Polysiloxanbasis hergestellt ist.

13. Verfahren nach einem der Ansprüche 1 bis 12, **dadurch gekennzeichnet, dass** der für den Sprühschritt oder den vorgeschalteten Flutschritt verwendete Lack (8; 10; 14) eine höhere Viskosität aufweist als der für den nachfolgenden Flutschritt verwendete Lack (16).

14. Abdeckscheibe (1) aus einem Kunststoffmaterial (4), zum Verschließen einer Lichtaustrittsöffnung einer Beleuchtungseinrichtung eines Kraftfahrzeugs, **dadurch gekennzeichnet, dass** die Abdeckscheibe (1) mittels eines Verfahrens nach einem der Ansprüche 1 bis 13 mit einem Lack beschichtet worden ist.

## Claims

1. Method for coating a plastic part (1) with a lacquer, wherein in a flooding step a surface of the plastic part (1) to be coated is provided with lacquer (16) by applying lacquer (16) to a flooding region (2) of the surface to be coated and by draining off the lacquer (16) over a flood-off region (3), **characterized in that** lacquer (8, 10) is sprayed on the flood-off region (3) in a spraying step before the flooding step is carried out; so that a lacquer coating (7, 17) is formed in the flood-off region (3), which lacquer coating consists of sprayed-on and flooded-on lacquer (8, 10; 16), and a lacquer coating (17), which consists only of flooded-on lacquer (16), is formed in the flooding region (2) of the surface to be coated.

2. Method for coating a plastic part (1) with a lacquer, a surface of the plastic part (1) to be coated being provided with a lacquer layer (17) in a flooding step by loading a flooding region (2) of the surface to be coated with lacquer (16) and by draining off the lacquer (16) over a flood-off region (3), **characterized in that** the flood-off region (3) is provided with lacquer (14) in a separate preceding flooding step before the flooding step is carried out, so that in the flood-off region (3) a lacquer coating (11, 17) is formed, which consists of lacquer (14, 16) flooded during the separate preceding flooding step and flooded during the subsequent flooding step, and in the flood-on region (2) of the surface to be coated a lacquer coating (17) is formed, which consists only of the lacquer (16) flooded during the subsequent flooding step.

3. Method according to claim 1 or 2, **characterized in that** an evaporation step takes place between the spraying step or the preceding flooding step and the subsequent flooding step, and **in that** in the subsequent flooding step the lacquer layer (7; 11) applied during the spraying step or the preceding flooding step is dissolved, so that a surface structure produced during the spraying step or the preceding flooding step is dissolved.

4. Method according to one of claims 1 to 3, **characterized in that** the plastic part (1) is subjected to a lacquer curing step after its coating with the lacquer (8; 10; 14; 16).

5. Method according to one of claims 1 to 4, **characterized in that** the plastic part (1) is brought to a temperature between 20°C and 40°C before coating with the lacquer (8; 10; 14; 16).

6. Method according to one of claims 1 to 5, **characterized in that** the plastic part (1) is kept at a temperature between 20°C and 40°C during the coating with the lacquer (8; 10; 14; 16).

7. Method according to one of claims 1 to 6, **characterized in that** the spraying step is carried out by means of spraying nozzles (6) and/or the preceding flooding step and/or the subsequent flooding step is carried out by means of flooding nozzles (12).

8. Method according to claim 7, **characterized in that** a position and/or orientation of the spraying nozzles (6) and/or the flooding nozzles (12; 15) during the coating of the plastic part (1) with the lacquer (8; 10; 14; 16) is varied relative to the plastic part (1) by means of a robot.

9. Method according to one of claims 1 to 8, **characterized in that** the plastic part (1) is a cover pane of a motor vehicle lighting device.

10. Method according to claim 9, **characterized in that** the cover pane is made of polycarbonate.

11. Method according to claim 9 or 10, **characterized in that** the cover pane has a transparent light-transmitting surface (2) and an edge region (3) which at least partially surrounds it, the light-transmitting surface (2) forming the flood region of the plastic part and the edge region (3) forming the flood region of the plastic part (1).

12. Method according to any of Claims 1 to 11, **characterized in that** the lacquer is prepared on a polysiloxane basis.

13. Method according to one of claims 1 to 12, **characterized in that** the lacquer (8; 10; 14) used for the spraying step or the preceding flooding step has a higher viscosity than the lacquer (16) used for the subsequent flooding step.

14. Cover pane (1) made of a plastic material (4) for closing a light exit opening of a lighting device of a motor vehicle, **characterized in that** the cover pane (1) has been coated with a lacquer by means of a method according to one of claims 1 to 13.

## Revendications

1. Procédé pour revêtir une pièce plastique (1) d'une peinture, dans lequel, au cours d'une étape de trempage, une surface à revêtir de la pièce plastique (1) est pourvue d'une couche de peinture (17) en soumettant une zone de trempage (2) de la surface à revêtir à l'effet d'une peinture (16) et en faisant circuler la peinture (16) sur toute l'étendue d'une zone de ruissellement (3), **caractérisé en ce que**, avant la réalisation de l'étape de trempage, de la peinture (8; 10) est pulvérisée sur la zone de ruissellement (3) au cours d'une étape de pulvérisation, de sorte qu'un revêtement de peinture (7, 17), qui est constitué de la peinture (8, 10; 16) pulvérisée et utilisée pour le trempage, est formé dans la zone de ruissellement (3), et qu'un revêtement de peinture (17), qui n'est constitué que de peinture (16) utilisée pour le trempage, est formé dans la zone de trempage (2) de la surface à revêtir.

2. Procédé pour revêtir une pièce plastique (1) d'une peinture, dans lequel, au cours d'une étape de trempage, une surface à revêtir de la pièce plastique (1) est pourvue d'une couche de peinture (17) en soumettant une zone de trempage (2) de la surface à revêtir à l'effet d'une peinture (16) et en faisant s'écouler la peinture (16) sur toute l'étendue d'une zone de ruissellement (3), **caractérisé en ce que**, avant la réalisation de l'étape de trempage, la zone de ruissellement (3) est pourvue de peinture (14) au cours d'une étape de trempage précédente séparée, de sorte qu'un revêtement de peinture (7, 17), qui est constitué de la peinture (14, 16) utilisée pour le trempage pendant l'étape de trempage précédente et utilisée pour le trempage pendant l'étape de peinture suivante, est formé dans la zone de ruissellement (3), et qu'un revêtement de peinture (17), qui n'est constitué que de la peinture (16) utilisée pour le trempage pendant l'étape de trempage suivante, est formé dans la zone de trempage (2) de la surface à revêtir.

3. Procédé selon la revendication 1 ou 2, **caractérisé en ce qu'**une étape d'évaporation a lieu entre l'étape de pulvérisation ou l'étape de trempage précédente et l'étape de trempage suivante et, lors de l'étape de trempage suivante, la couche de peinture (7; 11) appliquée lors de l'étape de pulvérisation ou lors de l'étape de trempage précédente est attaquée, de sorte qu'une structure superficielle ainsi obtenue lors de l'étape de pulvérisation ou lors de l'étape de trempage précédente est dissoute.

4. Procédé selon l'une quelconque des revendications 1 à 3, **caractérisé en ce que** la pièce plastique (1), après avoir été revêtue de la peinture (8; 10; 14; 16), est soumise à une étape de durcissement.

5. Procédé selon l'une quelconque des revendications 1 à 4, **caractérisé en ce que** la pièce plastique (1), avant d'être revêtue de la peinture (8; 10; 14; 16), est amenée à une température comprise entre 20°C et 40°C.

6. Procédé selon l'une quelconque des revendications 1 à 5, **caractérisé en ce que** la pièce plastique (1), pendant qu'elle est revêtue de la peinture (8; 10; 14; 16), est maintenue à une température comprise entre 20°c et 40°C.

7. Procédé selon l'une quelconque des revendications 1 à 6, **caractérisé en ce que** l'étape de pulvérisation est réalisée au moyen de buses de pulvérisation (6) et/ou l'étape de trempage précédente et/ou l'étape de trempage suivante sont réalisées au moyen de buses de projection (12).

8. Procédé selon la revendication 7, **caractérisé en ce qu'**une position et/ou orientation des buses de pulvérisation (6) et/ou des buses de projection (12; 15) par rapport à la pièce plastique (1), pendant le revêtement de la pièce plastique (1) par la peinture (8; 10; 14; 16), sont modifiées au moyen d'un robot.

9. Procédé selon l'une quelconque des revendications 1 à 8, **caractérisé en ce que** la pièce plastique (1) est un cabochon de dispositif d'éclairage de véhicule à moteur.

10. Procédé selon la revendication 9, **caractérisé en ce que** le cabochon est fabriqué en polycarbonate.

11. Procédé selon la revendication 9 ou 10, **caractérisé en ce que** le cabochon présente une surface transparente laissant passer la lumière (2) et une zone marginale (3) entourant au moins en partie celle-ci, dans lequel la surface laissant passer la lumière (2) forme la zone de trempage de la pièce plastique et la zone marginale (3) forme la zone de ruissellement de la pièce plastique (1).

12. Procédé selon l'une quelconque des revendications 1 à 11, **caractérisé en ce que** la peinture est fabriquée à base de polysiloxane.

13. Procédé selon l'une quelconque des revendications 1 à 12, **caractérisé en ce que** la peinture (8; 10; 14) utilisée pour l'étape de pulvérisation ou l'étape de trempage précédente présente une viscosité supérieure à celle de la peinture (16) utilisée pour l'étape de trempage suivante.

14. Cabochon (1) composé d'une matière plastique (4), pour la fermeture d'une ouverture de sortie de lumière d'un dispositif d'éclairage d'un véhicule à moteur, **caractérisé en ce que** le cabochon (1) a été revêtu d'une peinture au moyen d'un procédé selon l'une quelconque des revendications 1 à 13.
